Europäisches Patentamt

European Patent Office

Office européen des brevets

(19)

(11) **EP 1 329 048 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(21) Anmeldenummer: **01988973.2**

(22) Anmeldetag: **22.10.2001**

(51) Int Cl.[7]: **H04L 1/00**

(86) Internationale Anmeldenummer:
**PCT/DE2001/004010**

(87) Internationale Veröffentlichungsnummer:
**WO 2002/035710 (02.05.2002 Gazette 2002/18)**

(54) **VORRICHTUNG UND VERFAHREN ZUR RATENANPASSUNG**

RATE ADAPTATION DEVICE AND METHOD

DISPOSITIF ET PROCEDE D'ADAPTATION DE DEBIT

(84) Benannte Vertragsstaaten:
**DE FR GB**

(30) Priorität: **24.10.2000 DE 10052720**

(43) Veröffentlichungstag der Anmeldung:
**23.07.2003 Patentblatt 2003/30**

(73) Patentinhaber: **SIEMENS AKTIENGESELLSCHAFT 80333 München (DE)**

(72) Erfinder:
 • **FALKENBERG, Andreas Escondido, CA 92026 (US)**
 • **LANDENBERGER, Holger 46395 Bocholt (DE)**
 • **KUNZ, Albrecht 66121 Saarbrücken (DE)**

(56) Entgegenhaltungen:
WO-A-99/53628           US-A- 5 416 787
US-A- 5 781 542

 • IRVINE J ET AL: "LINK ADAPTATION TO IMPROVE COVERAGE IN THE TETRA PRIVATE MOBILE RADIO SYSTEM" VTC 1999-FALL. IEEE VTS 50TH. VEHICULAR TECHNOLOGY CONFERENCE. GATEWAY TO THE 21ST. CENTURY COMMUNICATIONS VILLAGE. AMSTERDAM, SEPT. 19 - 22, 1999, IEEE VEHICULAR TECHNOLGY CONFERENCE, NEW YORK, NY: IEEE, US, Bd. 2 CONF. 50, September 1999 (1999-09), Seiten 1091-1095, XP000924679 ISBN: 0-7803-5436-2

EP 1 329 048 B1

**Beschreibung**

Die vorliegende Erfindung bezieht sich auf eine Vorrichtung und ein Verfahren zur Ratenanpassung nach dem Oberbegriff des Anspruchs 1 bzw. dem Oberbegriff des Anspruchs 8 und insbesondere auf eine Vorrichtung und ein Verfahren zur Ratenanpassung einer ersten Bandbreite an eine zweite Bandbreite für Sprachkanäle in GSM oder TD-SCDMA-Systemen.

Eine solche Vorrichtung und ein solches Verfahren sind beispielsweise aus der US 5,781,542 A bekannt. Dort erfolgt eine Verteilung von Nutzdaten-Teilmengen auf verschiedene Kodierungszweige anhand der Spreizfaktoren, die den Nutzdaten-Teilmengen zugeordnet sind.

In der WO 99/53628 A2 wird ein Datenübertragungsverfahren in einem CDMA-System beschrieben. Dort vorgestellte Schaltungsanordnungen enthalten eine Steuereinrichtung, die unmittelbar auf Ratenanpassungsschaltkreise einwirkt. Auf eine etwaige Abhängigkeit von einer Nutzdatenbandbreite und einer Übertragungsdatenbandbreite wird nicht eingegangen.

Der typische Sprachservice bzw. die herkömmlichen Sprachkanäle, wie sie z.B. in GSM- oder TD-SCDMA-Systemen verwendet werden, definiert Datenblöcke, die entsprechend ihrer Relevanz sortierte Sprachdaten enthalten. Genauer gesagt besitzen derartige Sprachkanäle Datenblöcke mit unterschiedlicher Priorität, die sich im Wesentlichen aus subjektiven Qualitätskriterien ergeben. Das führt dazu, dass ein Teil der zu übermittelnden Sprachdaten beispielsweise durch einen sog. "Convolutional Codierer" kodiert werden müssen, da sie für die korrekte Dekodierung der Sprachdaten eine höhere Priorität besitzen als ein zweiter Teil des Datenblocks, welcher nicht kodiert werden muss, da dieser für die korrekte Dekodierung der Sprache eine niedrige Priorität besitzt.

Ein besonderes Problem ergibt sich hierbei bei einer Ratenanpassung, welche durchgeführt werden muss, da eine Datenrate auf einer physikalischen Schnittstelle nicht immer mit einer Datenrate einer Schnittstelle von höheren Ebenen übereinstimmt. Diese Ratenanpassung besteht darin, entweder eine gewisse Anzahl von Bits zu wiederholen, wenn der zur Verfügung stehende physikalische Kanal bzw. die physikalische Schnittstelle eine höhere Datenrate zur Verfügung stellt als benötigt wird, oder einige Bits zu punktieren, d.h. aus dem Datenstrom zu löschen, wenn der physikalische Kanal eine niedrigere als die benötigte Datenrate zur Verfügung stellt.

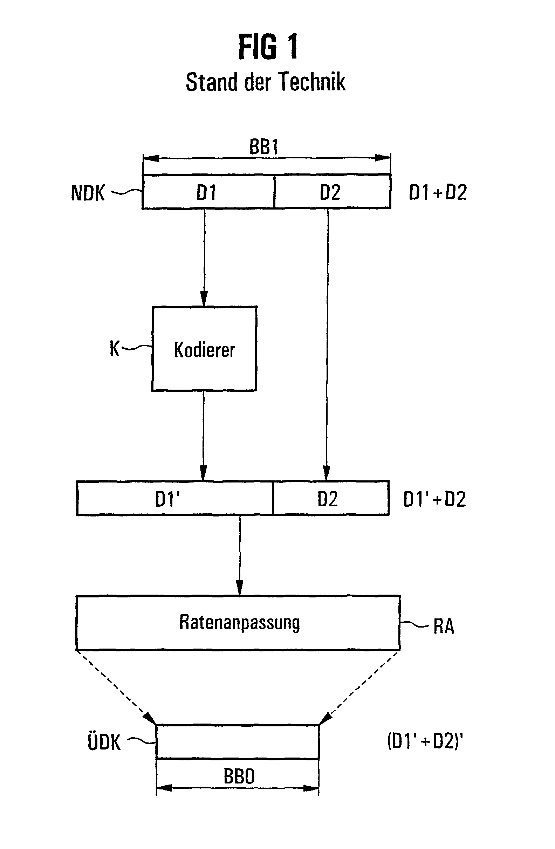

Figur 1 zeigt eine vereinfachte Blockdarstellung einer herkömmlichen Vorrichtung zur Ratenanpassung von derartigen Sprachdaten. Gemäß Figur 1 bezeichnet NDK einen Nutzdatenkanal bzw. Kanal höherer Ebene, der eine erste Bandbreite BB1 aufweist und beispielsweise ein Datenpaket D1 mit höherer Priorität und ein Datenpaket D2 mit geringerer Priorität besitzt. Da Übertragungsfehler im höher priorisierten Datenpaket D1 von einem Benutzer bzw. Empfänger als unangenehm empfunden werden, werden diese gemäß Figur 1 in einem Kodierer K kodiert, wodurch das kodierte Datenpaket D1' erzeugt wird. Das nieder priorisierte Datenpaket D2 wird wegen seiner Unempfindlichkeit bzw. wegen seines geringen Störempfindlichkeit für einen Empfänger beispielsweise nicht kodiert durchgegeben. Auf diese Weise erhält man eine teilweise kodierte Datenmenge D1'+D2, welche jedoch üblicherweise mit einer zur Verfügung stehenden zweiten Bandbreite BB0 des Übertragungsdatenkanals ÜDK bzw. der physikalischen Schnittstelle nicht übereinstimmt.

Zur Ratenanpassung wird nunmehr eine Ratenanpassungseinheit RA verwendet, die entweder eine gewisse Anzahl von Bits wiederholt, wenn der zur Verfügung stehende Übertragungsdatenkanal ÜDK eine höhere Datenrate bzw. größere Bandbreite aufweist, oder einige Bits punktiert bzw. löscht, wenn der Übertragungsdatenkanal ÜDK eine niedrigere als die benötigte Datenrate bzw. Bandbreite zur Verfügung stellt.

Gemäß Figur 1 können üblicherweise nur Daten in dem Teil gelöscht werden, welcher kodiert ist. Wenn die Daten in einem nicht dargestellten Empfänger anschließend wieder dekodiert werden, so müssen die fehlenden Bits wieder in den Datenstrom eingefügt werden, wobei ein Dekodierer mögliche Fehler erkennt und eventuell behebt. Es wird demzufolge eine kalkulierte Bitfehlerrate im Datenstrom bzw. bei der Datenübertragung akzeptiert.

Die in der Regel angewandte Ratenanpassung gemäß Figur 1 bringt jedoch insbesondere bei der Punktierung ein wesentliches Problem mit sich. Durch die Punktierung werden Bits, nachdem sie kodiert wurden, aus dem Datenstrom gelöscht. Bei der Dekodierung werden diese Bits jedoch durch neutrale (erasure) Werte ersetzt. Das heißt, es werden Werte in den Datenstrom eingefügt, die dazu führen können, dass ein Fehlerschutz reduziert ist. Durch eine starke Punktierung sinkt also die Performance bzw. Leistungsfähigkeit des Gesamtsystems. Andererseits wird durch ein Wiederholen von einzelnen Bits unter Umständen wertvolle Bandbreite verschenkt, wenn diese nicht sinnvoll in dem Dekodierer genutzt wird.

Der Erfindung liegt daher die Aufgabe zu Grunde, eine Vorrichtung und ein Verfahren zur Ratenanpassung zu schaffen, welche einfach und kostengünstig zu realisieren ist und eine Leistungsfähigkeit des Gesamtsystems nicht beeinflusst.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 8 gelöst.

Insbesondere durch die Verwendung einer Kodiervorrichtung zum Kodieren von zumindest einer Teilmenge von Daten eines Nutzdatenkanals und einer Steuereinheit zum Steuern einer Größe der von der Kodiervorrichtung zu kodierenden Teilmenge in Abhängigkeit von einer ersten und zweiten Bandbreite erhält man ohne explizite Verwendung einer Ratenanpassungseinheit auf einfache und kostengünstige Weise eine Ratenanpassung. Da die Kodiervorrichtung insbesondere bei einer Ratenanpassung von Sprachdaten ohnehin vorhanden ist, kann eine derartige Sprachdaten-Ratenanpassung besonders kostengünstig hergestellt werden.

Ferner kann eine Ratenanpassungseinheit zum Anpassen einer Bandbreite des zumindest teilweise kodierten Nutzdatenkanals an die Bandbreite des Übertragungsdatenkanals vorgesehen sein, wobei die Ratenanpassungseinheit von der Steuereinheit gesteuert wird. Auf diese Weise lassen sich auch Ratenanpassungen realisieren, die unter ausschließlicher Verwendung der Kodiervorrichtung und einer entsprechenden Teilmenge von Daten des Nutzdatenkanals nicht realisierbar ist.

Ferner kann die Ratenanpassungseinheit von der Steuereinheit auch in Abhängigkeit von der in der Kodiervorrichtung durchgeführten Kodierung gesteuert werden, wodurch sich eine weitere Verfeinerung der Ratenanpassung erzielen lässt. Insbesondere bei Durchführung einer Punktierung können somit in Kenntnis einer jeweiligen Kodierung vorzugsweise Daten bzw. Bits mit geringer Priorität gelöscht bzw. herausgenommen werden.

Vorzugsweise besteht die Kodiervorrichtung aus einer Vielzahl von parallel arbeitenden Kodiereinheiten, die beispielsweise aus einem 1/3-Kodierer und einem 1/2-Kodierer bestehen. Bei Verwendung von derartigen Kodierern, die insbesondere in GSM- oder TD-SCDMA-Systemen eingesetzt werden, lässt sich in vorteilhafter Weise eine fein abgestufte Ratenanpassung realisieren.

In den weiteren Unteransprüchen sind weitere vorteilhafte Ausgestaltungen der Erfindung gekennzeichnet.

Die Erfindung wird nachstehend anhand von Ausführungsbeispielen unter Bezugnahme auf die Zeichnung näher beschrieben.

Es zeigen:

Figur 1      eine vereinfachte Blockdarstellung einer Vorrichtung zur Ratenanpassung gemäß dem Stand der Technik;

Figur 2      eine vereinfachte Blockdarstellung einer Vorrichtung zur Ratenanpassung gemäß einem ersten Ausführungsbeispiel;

Figur 3      eine vereinfachte Blockdarstellung einer Vorrichtung zur Ratenanpassung gemäß einem zweiten Ausführungsbeispiel; und

Figur 4      eine vereinfachte Blockdarstellung einer Vorrichtung zur Ratenanpassung gemäß einem dritten Ausführungsbeispiel.

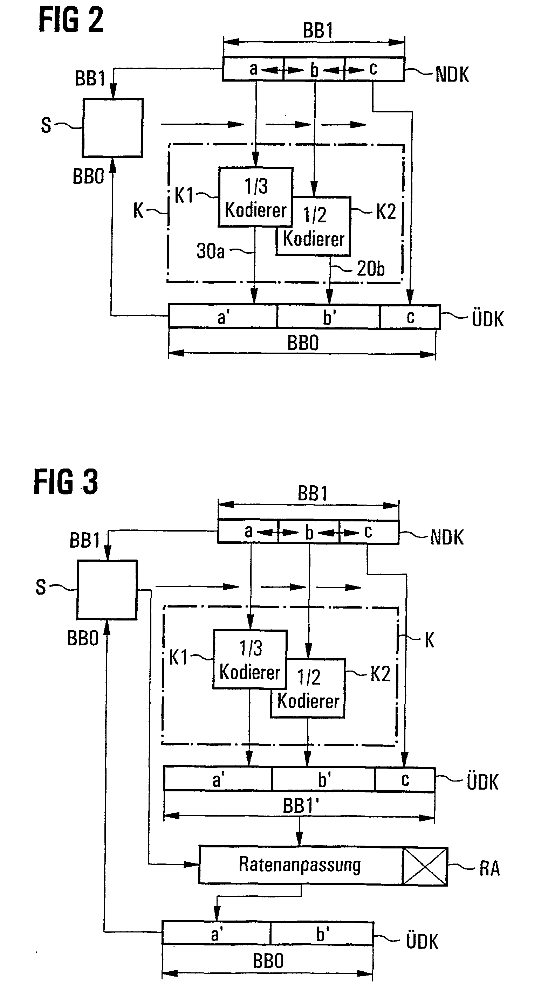

Figur 2 zeigt eine vereinfachte Blockdarstellung einer Vorrichtung zur Ratenanpassung einer ersten Bandbreite BB1 eines Nutzdatenkanals NDK an eine zweite Bandbreite BB0 eines Übertragungsdatenkanals ÜDK. Da ein bei beispielsweise GSM- und TD-SCDMA-Systemen vorgesehener Sprachkodierer Daten mit unterschiedlicher Wichtigkeit bzw. Priorität erzeugt, ist es möglich, Teile der Daten unkodiert zu lassen und andere Teile der Daten zu kodieren. Bei derartigen Systemen bzw. Sprachkodierern gibt es insgesamt sechs zu unterscheidende Qualitätsstufen (Prioritäten) von Bits, die für Sprache übertragen werden und von Benutzern subjektiv ermittelt werden. Als erste Vereinfachung werden gemäß Figur 2 diese sechs subjektiven Qualitätsstufen in drei Qualitätsgruppen a, b und c zusammengefasst, wodurch sich bereits eine Vereinfachung für die Ratenanpassung ergibt. Genauer gesagt besitzt die Qualitätsgruppe c bzw. ein dazugehöriges Datenpaket des Nutzdatenkanals NDK eine geringe Priorität bzw. Wichtigkeit, die Qualitätsgruppe b bzw. das dazugehörige Datenpaket eine mittlere Priorität und die Qualitätsgruppe a bzw. ein dazugehöriges Datenpaket eine höchste Priorität.

Beispielsweise beträgt die Länge der Datenpakete a, b und c 112 Bits ($112 = a + b + c$). Demgegenüber besitzt die Länge des im Übertragungsdatenkanal ÜDK übertragenen Datenpakets beispielsweise 296 Bits. Zur Anpassung dieser unterschiedlichen Datenraten bzw. Bandbreiten muss folglich eine Ratenanpassung durchgeführt werden. Erfindungsgemäß erfolgt nunmehr diese Ratenanpassung nicht durch eine Ratenanpassungseinheit sondern durch die Verwendung einer ohnehin im System vorhandenen Kodiervorrichtung K.

In GSM- oder TD-SCDMA-Systemen sind beispielsweise eine 1/3-Kodiereinheit K1 und eine 1/2-Kodiereinheit K2 vorhanden, die jeweils eine Verdreifachung bzw. Verdoppelung der eingegebenen Datenmenge inklusive Kodierung bewirken. Zur Realisierung einer Ratenanpassung existiert ferner eine Steuereinheit S, die nunmehr eine Größe bzw. Länge der von der Kodiervorrichtung K zu kodierenden Datenpakete a, b und c des Nutzdatenkanals NDK in Abhängigkeit von der geforderten Ratenanpassung bzw. der ersten und der zweiten Bandbreite BB1 und BB0 steuert. Bei einer Ratenanpassung von 112 Bit pro Datenpaket im Nutzdatenkanal NDK auf eine Länge von 296 Bit pro Datenpaket im Übertragungsdatenkanal ÜDK, wobei jeweils 8 sogenannte Tail Bits verwendet werden ($296 = a' + b' + c$), ergeben sich folgende Gleichungen:

$$NDK\ 112 = a + b + c$$

$$ÜDK\ 296 = 3 * (a + 8) + 2 * (b + 8) + c + 8$$

Um nun eine Ratenanpassung zwischen dem Nutzdatenkanal NDK und dem Übertragungsdatenkanal ÜDK zu erhalten, kann die Steuereinheit S die Datenmenge bzw. Länge für die Teilpakete a, b und c nach folgender Tabelle auswählen bzw. ansteuern, wodurch man ohne Verwendung einer zusätzlichen Ratenanpassungseinheit eine Ratenanpassung erhält.

| a | b | c |
|---|---|---|
| 76 | 0 | 36 |
| 20 | 8 | 84 |
| 16 | 16 | 80 |
| 12 | 24 | 76 |
| 8 | 32 | 72 |
| 4 | 40 | 68 |

In dem vorstehend beschriebenen sogenannten "half rate speech"-Modus werden die Sprachdaten bei TD-SCDMA in Datenpakete der Länge 112 Bits unter Nutzung des "half rate speech"-Kanals gepackt, wobei ein Paket 20 ms dauert. Dies entspricht einer Nettodatenrate von 5,6 kBit.

In gleicher Weise kann jedoch auch ein sogenannter "enhanced full rate speech"-Modus durchgeführt werden, wobei Datenpakete mit einer Länge von 244 Bit pro 20 ms erzeugt werden, was einer Nettodatenrate von 12,2 kBit entspricht. Die vorstehenden Gleichungen ändern sich hierbei wie folgt:

$$NDK\ 244 = a + b + c$$

$$ÜDK\ 624 = 3 * (a + 8) + 2 * (b + 8) + c + 8$$

Die für die Steuereinheit S möglichen Größen bzw. Längen für die zu kodierenden Teilmengen a, b und c ergeben sich aus folgender Tabelle:

| a | b | c |
|---|---|---|
| 96 | 140 | 8 |
| 100 | 132 | 12 |
| 104 | 124 | 16 |
| 108 | 116 | 20 |
| 112 | 108 | 24 |
| 116 | 100 | 28 |
| 120 | 92 | 32 |
| 124 | 84 | 36 |
| 128 | 76 | 40 |
| 132 | 68 | 44 |
| 136 | 60 | 48 |

(fortgesetzt)

| a | b | c |
|---|---|---|
| 140 | 52 | 52 |
| 144 | 44 | 56 |
| 152 | 28 | 64 |
| 160 | 12 | 72 |

Demzufolge kann auch in einem "enhanced full rate speech"-Modus ohne Verwendung einer speziellen Ratenanpassungseinheit lediglich unter Verwendung der ohnehin vorhandenen Kodiereinheiten K1 und K2 eine Ratenanpassung durchgeführt werden. Die Herstellungskosten für eine derartige Vorrichtung sind daher besonders günstig. Da darüber hinaus die Kodiereinheiten K1 und K2 parallel arbeiten können, liegen keine Hardwareresourcen brach, weshalb das gesamte System beschleunigt wird. Ein wesentlicher Vorteil einer derartigen Ratenanpassung liegt ferner in der verbesserten Anpassung an die Anforderungen der Sprachkanäle bzw. deren verschiedenen Qualitätsstufen bzw. Wichtigkeitsstufen für die Sprachübertragung. Dadurch ergibt sich bei voller Auslastung des zur Verfügung stehenden Übertragungsdatenkanals eine maximal mögliche Sprachqualität.

Figur 3 zeigt eine vereinfachte Blockdarstellung einer Vorrichtung zur Ratenanpassung gemäß einem zweiten Ausführungsbeispiel, wobei gleiche Bezugszeichen gleiche oder entsprechende Elemente bezeichnen und auf eine wiederholte Beschreibung nachfolgend verzichtet wird.

Gemäß Figur 3 kann neben den in Figur 2 dargestellten Elementen zusätzlich eine Ratenanpassungseinheit RA zum Anpassen einer Bandbreite BB1' des zumindest teilweise kodierten Nutzdatenkanals NDK an die Bandbreite BB0 des Übertragungsdatenkanals ÜDK verwendet werden, wobei die Ratenanpassungseinheit RA zusätzlich von der Steuereinheit S in Abhängigkeit von der ersten und zweiten Bandbreite BB1 und BB0 gesteuert wird. Genauer gesagt kann nunmehr beispielsweise eine Punktierung zur Verringerung einer Bandbreite durchgeführt werden, wobei unter Berücksichtigung der Wichtigkeit bzw. der Qualitätsstufen für die Teildatenpakete a, b und c entsprechende Daten verworfen werden. Auf diese Weise lassen sich auch derartige Ratenanpassungen realisieren, die auf Grund einer ausschließlichen Verwendung der Kodiervorrichtung K nicht realisierbar ist bzw. eine unerwünschte Verschlechterung der Sprachqualität verursacht. Da nunmehr die erste und zweite Bandbreite und ferner auch eine Wichtigkeit bzw. Qualitätsstufe der zu kodierenden Teil-Datenpakete a, b und c berücksichtigt wird, erhält man eine verbesserte Ratenanpassung.

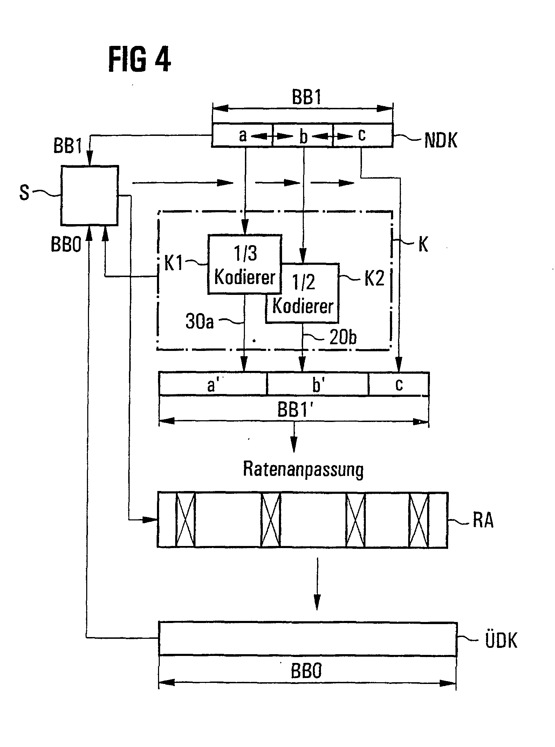

Figur 4 zeigt eine vereinfachte Blockdarstellung einer Vorrichtung zur Ratenanpassung gemäß einem dritten Ausführungsbeispiel, wobei gleiche Bezugszeichen wiederum gleiche Elemente bezeichnen wie in den Figuren 2 und 3, weshalb auf eine detaillierte Beschreibung nachfolgend verzichtet wird.

Gemäß Figur 4 besitzt die Vorrichtung zur Ratenanpassung wie die Vorrichtung gemäß Figur 3 eine zusätzliche Ratenanpassungseinheit RA. Wiederum werden Teil-Datenpakete a, b und c des Nutzdatenkanals NDK derart über die Steuereinheit S angesteuert, dass unterschiedliche Längen bzw. Größen von Datenpaketen den jeweiligen Kodiereinheiten K1 und K2 zugeführt werden. Ferner wird wie in Figur 3 die Ratenanpassungseinheit RA von der Steuereinheit S in Abhängigkeit von der ersten und zweiten Bandbreite bzw. den jeweiligen Längen der Qualitätsstufen bzw. Teil-Datenpaketen a, b und c gesteuert. Gemäß dem dritten Ausführungsbeispiel wird jedoch nunmehr ferner die Art der Kodierung bei der Ratenanpassung in der Ratenanpassungseinheit RA berücksichtigt, wobei das jeweils von den Kodiereinheiten K1 und K2 verwendete Kodierverfahren der Steuereinheit S mitgeteilt wird und diese in Abhängigkeit von dieser in der Kodiervorrichtung K durchgeführten Kodierung die Ratenanpassungseinheit RA zusätzlich ansteuert. In Kenntnis der jeweiligen Kodierverfahren und der Größe der jeweiligen Teilpakete a, b und c sowie einer grundsätzlich benötigten Ratenanpassung zwischen BB1 und BB0 kann somit beispielsweise eine gezielte Punktuierung derart durchgeführt werden, dass lediglich unkritische Daten (niedrige Priorität) herausgenommen bzw. gelöscht werden. Auf diese Weise erhöht man die Qualität der Ratenanpassung bei maximaler Nutzung einer zur Verfügung stehenden Übertragungsbandbreite. Da ferner die ohnehin vorhandenen Kodiereinheiten K1 und K2 zur Ratenanpassung mit verwendet werden, verringern sich darüber hinaus die Herstellungskosten eines Gesamtsystems.

Die vorliegende Erfindung wurde anhand von kodierten Sprachdaten in einem GSM- oder TD-SCDMA-System beschrieben. Sie ist jedoch nicht darauf beschränkt und betrifft vielmehr alle weiteren Systeme, in denen eine Ratenanpassung von Daten mit unterschiedlicher Priorität durchgeführt wird. Ferner wurde die Erfindung anhand von drei Qualitätsgruppen bzw. Teil-Datenpaketen beschrieben. Sie ist jedoch nicht darauf beschränkt und kann in gleicher Weise auf eine derartige Zusammenfassung verzichten und die in einem System vorhandenen Qualitätsstufen gesondert von einer jeweiligen Kodiervorrichtung verarbeiten. In gleicher Weise kann demzufolge die Kodiervorrichtung eine Vielzahl von Kodiereinheiten aufweisen, die insbesondere nicht auf die beschriebenen 1/3- und 1/2-Kodierer beschränkt sind.

**Patentansprüche**

1. Vorrichtung zur Ratenanpassung einer ersten Bandbreite (BB1) eines Nutzdatenkanals (NDK) an eine zweite Bandbreite (BB0) eines Übertragungsdatenkanals (ÜDK),
   mit einer Kodiervorrichtung (K) zum Kodieren von zumindest einer ausgewählten Teilmenge (a, b) von Daten des Nutzdatenkanals (NDK) und wobei nicht-ausgewählte Daten des Nutzdatenkands unkodiert bleiben, und zusammen mit den kodierten Daten über den übertragungskanal übertragen werden, **gekennzeichnet durch**
   eine Steuereinheit (S) zum Steuern einer Größe der von der Kodiervorrichtung (K) zu kodierenden Teilmenge (a, b) von Daten des Nutzdatenkanals (NDK) in Abhängigkeit von der ersten und zweiten Bandbreite (BB1, BB0).

2. Vorrichtung nach Patentanspruch 1,
   **gekennzeichnet durch** eine Ratenanpassungseinheit (RA) zum Anpassen einer Bandbreite (BB1') des zumindest teilweise kodierten Nutzdatenkanals (NDK) an die Bandbreite (BB0) des Übertragungsdatenkanals (ÜDK), wobei die Ratenanpassungseinheit (RA) von der Steuereinheit (S) gesteuert wird.

3. Vorrichtung nach Patentanspruch 2,
   **dadurch gekennzeichnet, dass** die Ratenanpassungseinheit (RA) von der Steuereinheit (S) ferner in Abhängigkeit von der in der Kodiervorrichtung (K) durchgeführten Kodierung gesteuert wird.

4. Vorrichtung nach einem der Patentansprüche 1 bis 3,
   **dadurch gekennzeichnet, dass** die Kodiervorrichtung (K) eine Vielzahl von parallel arbeitenden Kodiereinheiten (K1, K2) aufweist.

5. Vorrichtung nach einem der Patentansprüche 1 bis 4,
   **dadurch gekennzeichnet, dass** die Kodiervorrichtung (K) einen 1/3-Rate-Kodierer (K1) und einen 1/2-Rate-Kodierer (K2) aufweist.

6. Vorrichtung nach einem der Patentansprüche 1 bis 5,
   **dadurch gekennzeichnet, dass** der Nutzdatenkanal (NDK) kodierte Sprachdaten mit sechs subjektiven Qualitätsstufen aufweist, die zu drei Qualitätsgruppen (a, b, c) zusammengefasst sind.

7. Vorrichtung nach Patentanspruch 6,
   **dadurch gekennzeichnet, dass** die kodierten Sprachdaten Daten eines GSM- oder TD-SCDMA-Systems darstellen.

8. Verfahren zur Ratenanpassung einer ersten Bandbreite (BB1) eines Nutzdatenkanals (NDK) an eine zweite Bandbreite (BB0) eines Übertragungsdatenkanals (ÜDK) mit den Schritten:

a) Auswählen zumindest einer vorbestimmten Teilmenge (a, b) von Daten des Nutzdatenkanals (NDK);

b) Kodieren der ausgewählten Teilmenge (a, b) zum Erzeugen einer kodierten Teilmenge (a', b') von Daten; und

c) Zusammenfügen der kodierten Teilmenge (a', b') mit der nicht ausgewählten Teilmenge (c) von Daten des Nutzdatenkanals (NDK),

**dadurch gekennzeichnet, dass** in Schritt a) das Auswählen einer Größe der vorbestimmten Teilmenge (a, b) in Abhängigkeit von der ersten und zweiten Bandbreite (BB1, BB0) erfolgt.

9. Verfahren nach Patentanspruch 8,
**gekennzeichnet durch** den weiteren Schritt d) Durchführen einer zusätzlichen Ratenanpassung in Abhängigkeit von der ersten und zweiten Bandbreite (BB1, BB0).

10. Verfahren nach Patentanspruch 9,
**dadurch gekennzeichnet, dass** die zusätzliche Ratenanpassung ferner in Abhängigkeit von der Kodierung in Schritt b) durchgeführt wird.

11. Verfahren nach einem der Patentansprüche 8 bis 10,
**dadurch gekennzeichnet, dass** das Kodieren ein paralleles Kodieren der ausgewählten Teilmengen (a, b) von Daten des Nutzdatenkanals (NDK) darstellt.

12. Verfahren nach einem der Patentansprüche 8 bis 11,
**dadurch gekennzeichnet, dass** das Kodieren ein Durchführen einer 1/3-Rate-Kodierung und einer 1/2Rate-Kodierung darstellt.

13. Verfahren nach einem der Patentansprüche 8 bis 12,
**dadurch gekennzeichnet, dass** die Daten des Nutzdatenkanals (NDK) kodierte Sprachdaten mit sechs subjektiven Qualitätsstufen, die zu drei Qualitätsgruppen zusammengefasst sind, aufweist.

## Claims

1. Apparatus for rate matching of a first bandwidth (BB1) of a payload data channel (NDK) to a second bandwidth (BB0) of a transmission data channel (ÜDK),
having a coding apparatus (K) for coding at least one selected subset (a, b) of data of the payload data channel (NDK), and with non-selected data of the payload data channel remaining encoded, and being transmitted together with the coded data via the transmission channel,
**characterized by**
a control unit (S) for controlling a variable of the subset (a, b) (which is to be coded by the coding apparatus (K)) of data of the payload data channel (NDK) as a function of the first and second bandwidth (BB1, BB0).

2. Apparatus according to Patent Claim 1,
**characterized by** a rate matching unit (RA) for matching a bandwidth (BB1') of the at least partially coded payload data channel (NDK) to the bandwidth (BB0) of the transmission data channel (ÜDK), with the rate matching unit (RA) being controlled by the control unit (S).

3. Apparatus according to Patent Claim 2,
**characterized in that** the rate matching unit (RA) is furthermore controlled by the control unit (S) as a function of the coding carried out in the coding apparatus (K).

4. Apparatus according to one of Patent Claims 1 to 3,
**characterized in that** the coding apparatus (K) has a large number of coding units (K1, K2) which operate in parallel.

5. Apparatus according to one of Patent Claims 1 to 4,
**characterized in that** the coding apparatus (K) has a 1/3 rate coder (K1) and a 1/2 rate coder (K2).

6. Apparatus according to one of Patent Claims 1 to 5,
**characterized in that** the payload data channel (NDK) has coded speech data with six subjective quality levels which are combined to form three quality groups (a, b, c).

7. Apparatus according to Patent Claim 6,
**characterized in that** the coded speech data represents data for a GSM or TD-SCDMA system.

8. Method for rate matching of a first bandwidth (BB1) of a payload data channel (NDK) to a second bandwidth (BB0) of a transmission data channel (ÜDK), having the following steps:

a) selection of at least one predetermined subset (a, b) of data of the payload data channel (NDK);
b) coding of the selected subset (a, b) in order to produce a coded subset (a', b') of data; and
c) combination of the coded subset (a', b') with the non-selected subset (c) of data of the payload data channel (NDK),

**characterized in that**, in step a), a variable of the predetermined subset (a, b) is selected as a function of the first and second bandwidth (BB1, BB0).

**9.** Method according to Patent Claim 8, **characterized by** the further step d) of carrying out additional rate matching as a function of the first and second bandwidths (BB1, BB0).

**10.** Method according to Patent Claim 9, **characterized in that** the additional rate matching is also carried out as a function of the coding in step b).

**11.** Method according to one of Patent Claims 8 to 10, **characterized in that** the coding represents parallel coding of the selected subsets (a, b) of data of the payload data channel (NDK).

**12.** Method according to one of Patent Claims 8 to 11, **characterized in that** the coding represents carrying out 1/3 rate coding and 1/2 rate coding.

**13.** Method according to one of Patent Claims 8 to 12, **characterized in that** the data of the payload data channel (NDK) has coded speech data with six subjective quality levels, which are combined to form three quality groups.

**Revendications**

**1.** Dispositif pour adapter le débit d'une première largeur de bande (BB1) d'un canal de données utiles (NDK) à une deuxième largeur de bande (BB0) d'un canal à données de transmission (ÜDK), comportant un dispositif de codage (K) pour coder au moins une quantité partielle (a, b) sélectionnée de données du canal de données utiles (NDK), et des données non sélectionnées du canal de données utiles restent non codées et, conjointement avec les données codées, sont transmises par l'intermédiaire du canal à données de transmission, **caractérisé par** une unité de commande (S) pour commander en fonction de la première et de la deuxième largeur de bande (BB1, BB0) une taille de la quantité partielle (a, b) - que le dispositif de codage (K) doit coder - de données dans le canal de données utiles (NDK).

**2.** Dispositif selon la revendication 1, **caractérisé par** une unité d'adaptation de débit (RA) pour adapter une largeur de bande (BB1') du canal de données utiles (NDK) au moins en partie codé à la largeur de bande (BB0) du canal à données de transmission (ÜDK), l'unité d'adaptation de débit (RA) étant commandée par l'unité de commande (S).

**3.** Dispositif selon la revendication 2, **caractérisé en ce que** l'unité d'adaptation de débit (RA) est en outre commandée par l'unité de commande (S) en fonction du codage effectué dans le dispositif de codage (K).

**4.** Dispositif selon l'une des revendications 1 à 3, **caractérisé en ce que** le dispositif de codage (K) présente un grand nombre d'unités de codage (K1, K2) qui fonctionnent en parallèle.

**5.** Dispositif selon l'une des revendications 1 à 4, **caractérisé en ce que** le dispositif de codage (K) présente un codeur de débit 1/3 (K1) et un codeur de débit 1/2 (K2).

**6.** Dispositif selon l'une des revendications 1 à 5, **caractérisé en ce que** le canal de données utiles (NDK) comporte des données vocales codées d'après six niveaux de qualité subjectifs rassemblés en trois groupes de qualité (a, b, c).

**7.** Dispositif selon la revendication 6, **caractérisé en ce que** les données vocales codées représentent un système GSM ou TD-SCDMA.

**8.** Procédé pour adapter le débit d'une première largeur de bande (BB1) d'un canal de données utiles (NDK) à une deuxième largeur de bande (BB0) d'un canal à données de transmission (ÜDK), d'après les étapes suivantes :

a) on sélectionne au moins une quantité partielle (a, b) prédéfinie parmi des données du canal de données utiles (NDK),
b) on code la quantité partielle (a, b) sélectionnée pour produire une quantité partielle (a', b') codée de données et
c) on réunit la quantité partielle (a', b') codée à la quantité partielle (c) non sélectionnée parmi des données du canal de données utiles (NDK),

**caractérisé en ce qu'**on sélectionne à l'étape a) en fonction de la première et de la deuxième largeur de bande (BB1, BB0) une taille de la quantité partielle (a, b) prédéfinie.

**9.** Procédé selon la revendication 8, **caractérisé par** l'étape supplémentaire :

d) on effectue une adaptation de débit supplémentaire en fonction de la première et de la deuxième largeur de bande (BB1, BB0).

**10.** Procédé selon la revendication 9 **caractérisé en ce que** l'adaptation de débit supplémentaire est en outre effectuée en fonction du codage à l'étape b).

**11.** Procédé selon l'une des revendications 8 à 10, **caractérisé en ce que** le codage représente un codage parallèle effectué sur les quantités partielles (a, b) sélectionnées parmi les données du canal de données utiles (NDK).

12. Procédé selon l'une des revendications 8 à 11, **caractérisé en ce que** le codage équivaut à un codage 1/3 et à un codage 1/2.

13. Procédé selon l'une des revendications 8 à 12, **caractérisé en ce que** les données du canal de données utiles (NDK) comportent des données vocales codées d'après six niveaux de qualité subjectifs rassemblées en deux groupes de qualité.

# FIG 1
### Stand der Technik

BB1

NDK — | D1 | D2 | D1+D2

K — Kodierer

| D1' | D2 | D1'+D2

| Ratenanpassung | — RA

ÜDK — (D1'+D2)'

BB0

# FIG 2

```
                        ┌──────── BB1 ────────┐
                        │   a  ⟷  b  ⟷  c  │──── NDK
        BB1 ┐           └──────────────────────┘
            ↓           │      │      │
    ┌───────┐           │      │      │
 S ─┤       │   ──→      ──→    ──→   │
    └───────┘      ┌─────────────────────┐
        BBO        │      ↓      ↓       │
              K1 ┐ │  ┌──────┐           │
        K ───    │ │  │ 1/3  │  ┌──────┐ │
                 │ │  │Kodierer│ │ 1/2  │─ K2
                 │ │  └──────┘  │Kodierer│
              30a ┘ │           └──────┘
                    │              └ 20b  │
                    └─────────────────────┘
                        ↓      ↓      ↓
        ┌──────────┬──────────┬──────────┐
        │    a'    │    b'    │    c     │─── ÜDK
        └──────────┴──────────┴──────────┘
        └──────────── BBO ────────────────┘
```

# FIG 3

```
                        ┌──────── BB1 ────────┐
                        │   a  ⟷  b  ⟷  c  │──── NDK
        BB1 ┐           └──────────────────────┘
            ↓           │      │      │
    ┌───────┐      ──→    ──→    ──→
 S ─┤       │──┐
    └───────┘  │   ┌─────────────────────┐
        BBO    │   │      ↓      ↓       │── K
            K1 ┐   │  ┌──────┐           │
               │   │  │ 1/3  │  ┌──────┐ │
               │   │  │Kodierer│ │ 1/2  │─ K2
               │   │  └──────┘  │Kodierer│
               │   │           └──────┘  │
               │   └─────────────────────┘
               │       ↓      ↓      ↓
        ┌──────────┬──────────┬──────────┐
        │    a'    │    b'    │    c     │─── ÜDK
        └──────────┴──────────┴──────────┘
        └──────────── BB1' ────────────────┘
                          ↓
        ┌──────────────────────────┬───┐
        │      Ratenanpassung      │ ⊠ │── RA
        └──────────────────────────┴───┘
                          ↓
        ┌──────────────┬──────────────┐
        │      a'      │      b'      │─── ÜDK
        └──────────────┴──────────────┘
        └────────────── BBO ──────────┘
```

# FIG 4